# EUROPÄISCHE PATENTSCHRIFT

(11) **EP 2 726 324 B1**
(45) Veröffentlichungstag und Bekanntmachung des Hinweises auf die Patenterteilung: **08.08.2018**
(21) Anmeldenummer: 12726619.5
(22) Anmeldetag: 08.06.2012
(51) Int. Cl.: B60N 2/235

(54) **BESCHLAGSYSTEM FÜR EINEN FAHRZEUGSITZ**
FITTING SYSTEM FOR A VEHICLE SEAT
SYSTÈME DE FERRUERE POUR UN SIÈGE DE VÉHICULE

(30) Priorität: 01.07.2011 DE 102011106284
(43) Veröffentlichungstag der Anmeldung: 07.05.2014
(73) Patentinhaber: Adient Luxembourg Holding S.à r.l., 1855 Luxembourg (LU)
(72) Erfinder: CHRISTOFFEL, Thomas, 66909 Herschweiler-Pettersheim (DE); HAMMANN, Heinrich, 67806 Teschenmoschel (DE); KRISCH, Christina, 67677 Enkenbach-Alsenborn (DE)
(74) Vertreter: Finger, Catrin
(86) Internationale Anmeldenummer: PCT/EP2012/060912
(87) Internationale Veröffentlichungsnummer: WO 2013/004450

(56) Entgegenhaltungen:
- EP-A1- 2 305 070
- DE-A1- 10 164 035
- DE-A1- 19 523 254
- DE-A1- 19 915 863

## Beschreibung

Die Erfindung betrifft ein Beschlagsystem für einen Fahrzeugsitz mit den Merkmalen des Oberbegriffs des Anspruches 1.

Ein Beschlagsystem dieser Art mit beidseitig jeweils einem als Rastbeschlag ausgebildeten Beschlag ist aus der DE 10 2009 029 858 A1 bekannt. Die Memoryvorrichtung umfasst eine scheibenförmige, sitzteilfeste Führungsplatte, eine relativ zur Führungsplatte drehbare Merkerscheibe, eine relativ zur Merkerscheibe drehbare, scheibenförmige, lehnenfeste Zahnplatte und eine mittels einer Welle drehbare Steuerscheibe. Alle Drehachsen fluchten miteinander und mit der Lehnenschwenkachse. Die Führungsplatte führt ein erstes Riegelelement in radialer Richtung. Das gezahnte erste Riegelelement wirkt mit einer radial nach innen weisenden, ersten Verzahnung an der Merkerscheibe zusammen, um die Merkerscheibe an das Sitzteil zu koppeln. Die Merkerscheibe führt ein zweites Riegelelement in radialer Richtung. Das gezahnte zweite Riegelelement wirkt mit einer radial nach innen weisenden, zweiten Verzahnung an der Zahnplatte zusammen, um die Merkerscheibe an die Lehne zu koppeln. Die sich drehende Steuerscheibe bewegt die beiden Riegelelemente in radialer Richtung.

In der DE 195 23 254 A1 wird ein Rastbeschlag für Fahrzeugsitze beschrieben. Der Rastbeschlag weist zwei relativ zueinander um die Längsachse eines Bolzens verschwenkbare Beschlagteile auf, denen eine Rastvorrichtung zugeordnet ist, die in ihrem Sperrzustand die beiden Beschlagteile miteinander formschlüssig verriegelt. Es ist eine mechanische Memory-Vorrichtung vorgesehen, die nach einer Verschwenkung des einen Beschlagteils aus einer beliebigen Schwenklage heraus in der einen Richtung relativ zum anderen Beschlagteil mittels eines Anschlages bei einer nachfolgenden Schwenkbewegung in der entgegengesetzten Richtung ein Wiederauffinden der Ausgangsschwenklage ermöglicht. Ein steuerbares Memory-Element ist bei einer Aktivierung der Memory-Vorrichtung von einer Bereitschaftsposition am einen Beschlagteil in eine durch den Anschlag definierte Ausgangsposition bewegbar, in welcher es an den anderen Beschlagteil derart angekuppelt ist, dass es einen dessen Schwenkwinkel entsprechenden Winkelbereich durchläuft.

Aus der EP 2 305 070 A1 ist eine gattungsbildende Sitzneigungsvorrichtung für ein Fahrzeug bekannt. Die Sitzneigungsvorrichtung umfasst einen Sperrmechanismus und einen Speichermechanismus, ist zwischen einem Sitzpolsterrahmen und einem Sitzlehnenrahmen angeordnet und umfasst eine Steuerwelle und einen Entsperrungsbetätigungshebel.
In der DE 199 15 863 A1 werden ein Fahrzeugsitz mit einem Gelenkmechanismus und ein Memory-Mechanismus für einen solchen Sitz beschrieben. Eine Lehne ist mit dem Sitz über ein Gelenk verbunden. Das Gelenk weist zwei Flansche auf, die mittels gezahnter Passstücke verbindbar sind, welche von einem Nocken betätigt werden. Der Nocken ist mit einem äußeren Memorymechanismus verbunden, der ein Betätigungsorgan aufweist, das mit diesem Nocken durch eine mechanische Verbindung mit großer Bewegung verbunden ist, wobei er derart angepasst ist, dass die Betätigung des Nockens das Betätigungsorgan nicht bewegt, und dass die Betätigung des Memorymechanismus die Bewegung des Nockens in seine entriegelte Stellung erzeugt.
Aus der DE 101 64 035 B4 ist ein Fahrzeugsitz mit einem Gelenkbeschlag bekannt. Der Fahrzeugsitz umfasst erste und zweite Sitzelemente, die für ein Verschwenken relativ zueinander um eine Schwenkachse montiert sind. Des Weiteren umfasst der Fahrzeugsitz mindestens einen Gelenkbeschlag, der ein Blockierteil aufweist, welches beweglich ist zwischen einer blockierten Stellung, welche ein relatives Verschwenken des ersten und zweiten Sitzelementes zueinander verhindert, und einer unverriegelten Stellung, welche ein freies Verschwenken des ersten und zweiten Sitzelements zueinander ermöglicht. Das Blockierteil wird durch ein erstes Antriebsmittel gesteuert, welches durch einen Benutzer betätigbar ist. Das erste Antriebsmittel ist in Richtung auf eine Rastposition vorgespannt, in der es das Blockierteil in seine Raststellung setzt, und ist in einer Betätigungsdrehrichtung beweglich bis zu einer Betätigungsposition, in der es das Blockierteil in dessen unverriegelte Stellung setzt. Die Rastposition und die Betätigungsposition des ersten Antriebsmittels sind gegenüber dem ersten Sitzelement festgelegt. Der Fahrzeugsitz umfasst zudem einen Memory-Mechanismus.
Der Erfindung liegt die Aufgabe zu Grunde, ein alternatives Beschlagsystem der eingangs genannten Art zu schaffen, dessen Memoryvorrichtung aus wenigen einfachen Bauteilen besteht. Diese Aufgabe wird erfindungsgemäß durch ein Beschlagsystem mit den Merkmalen des Anspruches 1 gelöst. Vorteilhafte Ausgestaltungen sind Gegenstand der Unteransprüche.
Die Verwendung von Hebeln und Koppeln anstelle von ganzen Scheiben reduziert die benötigte Materialmenge sowie den Bauraum und damit Gewicht und Herstellungskosten. Die Hebel und Koppeln sorgen für den Freischwenkvorgang sowohl für eine wechselnde Kopplung der Merkerscheibe als auch für eine Entriegelung der vorgesehenen Beschläge. Für eine Neigungseinstellung ist eine Entkopplung vorgesehen, vorzugsweise mittels eines Leerwegs.
Die mittels Feinschneiden hergestellten Verzahnungen werden auf eine Kopplung beschränkt, sinnvollerweise auf diejenige zur Lehne, was die Herstellungskosten reduziert. Die Kopplung zum Sitzteil wird vorzugsweise durch einen einfachen Eingriff zwischen einem Steuerelement und einer Sperraufnahme erreicht. Die Sperraufnahme ist vorzugsweise ein Abschnitt einer Steuerkontur, welche während des Freischwenkvorgangs durch Zusammenwirken mit dem Steuerelement den Steuerhebel ausgelenkt hält, wodurch die Verzahnungen in Eingriff gehalten werden.
Auch wenn die Beschreibung der Erfindung hinsichtlich der Anordnung des eingebauten Beschlagsystems davon ausgeht, dass die Merkerscheibe während des Freischwenkvorgangs an die Lehne und ansonsten an das Sitzteil gekoppelt ist, können durch einen gestürzten Einbau des Beschlagsystems die Verhältnisse auf den Kopf gestellt werden, d.h. die Merkerscheibe wäre dann während des Freischwenkvorgangs an das Sitzteil und ansonsten an die Lehne gekoppelt.
Das erfindungsgemäße Beschlagsystem wird in Fahrzeugsitzen bevorzugt zum Schwenken der Lehne eingesetzt. Es kann aber auch an anderen Stellen verwendet werden.

Im Folgenden ist die Erfindung anhand der Zeichnungen näher erläutert. Es zeigen
- Fig. 1: eine Seitenansicht eines nicht zur Erfindung gehörenden Beschlagsystems in einer Gebrauchsstellung,
- Fig. 2: eine Fig. 1 entsprechende Seitenansicht während der Neigungseinstellung,
- Fig. 3: eine Fig. 1 entsprechende Seitenansicht zu Beginn des Freischwenkvorgangs,
- Fig. 4: eine Fig. 1 entsprechende Seitenansicht in der freigeschwenkten Stellung,
- Fig. 5: eine Teilansicht einer Abwandlung des Beschlagsystems nach den Figuren 1 bis 4,
- Fig. 6: eine Seitenansicht eines Ausführungsbeispiels der Erfindung in einer Gebrauchsstellung,
- Fig. 7: eine Fig. 6 entsprechende Seitenansicht zu Beginn des Freischwenkvorgangs,
- Fig. 8: eine Fig. 6 entsprechende Seitenansicht während des Freischwenkvorgangs,
- Fig. 9: eine perspektivische Ansicht eines Beschlags, und
- Fig. 10: eine schematische Darstellung eines Fahrzeugsitzes.

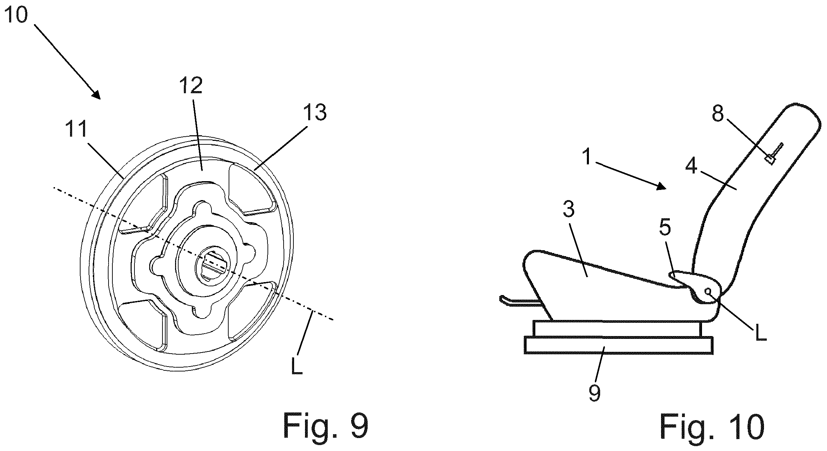

Ein Fahrzeugsitz 1 für ein Kraftfahrzeug (Fig. 10) weist ein Sitzteil 3 und eine relativ zu diesem um eine Lehnenachse L schwenkbare Lehne 4 auf. Mittels Betätigung eines ersten Betätigungselementes 5, welches vorzugsweise eine Welle 7 im Übergangsbereich zwischen Sitzteil 3 und Lehne 4 dreht, ist die Neigung der Lehne 4 relativ zum Sitzteil 3 zwischen verschiedenen Gebrauchsstellungen einstellbar. Mittels Betätigung eines zweiten Betätigungselementes 8 ist die Lehne 4 in eine Nichtgebrauchsstellung schwenkbar, vorliegend die freigeschwenkte Stellung, in welcher die nach vorne geschwenkte Lehne 4 den Zugang zu einer hinteren Sitzreihe erleichtert. Die Sitzlängsposition des Fahrzeugsitzes 1 ist optional mittels Sitzschienen 9 einstellbar, welche vorzugsweise auch beim Freischwenkvorgang entriegelt werden, damit der Fahrzeugsitz 1 als Ganzes nach vorne geschoben werden kann. Die Neigungseinstellung und das Freischwenken der Lehne 4 erfolgt mittels Beschlägen 10, mittels denen die Lehne 4 beidseitig am Sitzteil 3 angebracht ist (Fig. 9). Der Beschlag 10 weist ein erstes Beschlagteil 11 und ein zweites Beschlagteil 12 auf, welche relativ zueinander um die Lehnenachse L verdrehbar sind. Die Lehnenachse L definiert die verwendeten Richtungsangaben eines Zylinderkoordinatensystems. Die Welle 7 fluchtet mit der Lehnenachse L. Die beiden Beschlagteile 11 und 12 lassen sich jeweils näherungsweise in eine kreisrunde Scheibenform einbeschreiben. Zur Aufnahme der axial wirkenden Kräfte, also zum axialen Zusammenhalt der Beschlagteile 11 und 12, ist vorzugsweise ein Umklammerungsring 13 vorgesehen. Der Beschlag 10 ist als Rastbeschlag ausgebildet, d.h. die beiden Beschlagteile 11 und 12 sind miteinander verriegelbar, beispielsweise mittels mehrerer gezahnter Riegel, welche vom zweiten Beschlagteil 12 radial geführt und von einem wenigstens mittelbar federbelasteten Exzenter beaufschlagt radial nach außen bewegt werden, wo sie mit einem am ersten Beschlagteil 11 ausgebildeten Zahnkranz zusammenwirken, um den Beschlag 10 zu verriegeln, während sie durch Drehung der Welle 7, welche vorzugsweise einen Mitnehmer dreht, der wiederum den Exzenter und vorzugsweise eine mit den Riegeln zusammenwirkenden Steuerscheibe dreht, radial nach innen gezogen werden, um den Beschlag 10 zu entriegeln. Ein derartiger Rastbeschlag ist beispielsweise in der DE 20 2009 016 989 U1 beschrieben. Mit der Montage des Beschlags 10 ist das erste Beschlagteil 11 beispielsweise fest mit der Struktur der Lehne 4 verbunden, also lehnenfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne 4 und Sitzteil 3. Zwischen der Lehne 4 und dem Sitzteil 3 ist auf einer Fahrzeugsitzseite eine Memoryvorrichtung 50 vorgesehen, welche außerhalb des Kraftflusses liegt. Die Beschläge 10 auf den beiden Fahrzeugsitzseiten und die Memoryvorrichtung 50 sind Teile eines Beschlagsystems des Fahrzeugsitzes 1. Die Memoryvorrichtung 50 weist eine Merkerscheibe 51 auf, welche um eine Achse A drehbar gelagert ist. Die Merkerscheibe 51 ist axial versetzt zu dem auf der gleichen Fahrzeugsitzseite vorgesehenen Beschlag 10 angeordnet. Sie kann beispielsweise an diesem zugeordneten Beschlag 10, an einem lehnenfesten Lehnenelement 4a oder an einem sitzteilfesten Sitzteilelement 3a drehbar gelagert sein. Die Merkerscheibe 51 ist während des Freischwenkvorgangs an die Lehne 4 gekoppelt, vorzugsweise temporär lehnenfest, ist aber ansonsten an das Sitzteil 3 gekoppelt, vorzugsweise (temporär) sitzteilfest. Am Sitzteilelement 3a ist ein Steuerhebel 53 schwenkbar gelagert und mittels einer nicht dargestellten Feder von der Lehnenachse L weg vorgespannt. Der Steuerhebel 53 ist an einer Stelle auf eine später genauer beschriebene Weise mit der Merkerscheibe 51 gekoppelt. Am Steuerhebel 53 ist eine Koppel 54 angelenkt. Die Anlenkstelle der Koppel 54 weist einen größeren Abstand zur Schwenkachse des Steuerhebels 53 auf als die Stelle der Kopplung zur Merkerscheibe 51. Die Koppel 54 weist eine längliche Gestalt auf, wobei an einem Ende die Anlenkstelle an den Steuerhebel 53 vorgesehen und am gegenüberliegenden Ende ein Seil 55 befestigt ist, welches die Wirkverbindung (oder wenigstens einen Teil davon) zwischen dem zweiten Betätigungselement 8 und der Memoryvorrichtung 20 bildet. Die Koppel 54 ist mit einem Leerweg an einen Entriegelungshebel 56 gekoppelt. Vorliegend erfolgt diese Kopplung ungefähr in der Mitte der Koppel 54 mittels einer Schlitz-Zapfen-Führung, bestehend aus einem Entriegelungsschlitz 56c im Entriegelungshebel 56 und einem Entriegelungszapfen 54c an der Koppel 54. Der Entriegelungshebel 56 sitzt vorliegend drehfest auf der Welle 7, ebenso wie das erste Betätigungselement 5, kann aber auch auf andere Weise in Wirkverbindung mit dem ersten Betätigungselement 5 stehen.

Zur Kopplung der Merkerscheibe 51 an das Sitzteil 3 sind eine Steuerkontur 57 mit einer Sperraufnahme 58 und ein mit der Steuerkontur 57 zusammenwirkendes Steuerelement 59 vorgesehen. Die Sperraufnahme 58 ist vorzugsweise als ein wenigstens näherungsweise radial (vorliegend nach außen) verlaufender Abschnitt der Steuerkontur 57 ausgebildet. Das Steuerelement 59 kann - vorzugsweise formschlüssig - in die Sperraufnahme greifen, wodurch die Steuerkontur 57 und das Steuerelement 59 relativ zueinander fixiert sind. Außerhalb der Sperraufnahme 58 sind die Steuerkontur 57 und das Steuerelement 59 relativ zueinander um die Achse A beweglich. Das Steuerelement 59 ist am Steuerhebel 53 angeordnet (fixiert oder beweglich). Vorzugsweise ist der Steuerhebel 53 axial versetzt zur Steuerkontur 57 angeordnet, und das Steuerelement 59 ragt in die Steuerkontur 57 hinein. Der Steuerhebel 53 ist so vorgespannt, dass das Steuerelement 59 außerhalb des Freischwenkvorgangs in der Sperraufnahme 58 gehalten wird. Dadurch ist die Merkerscheibe 51 außerhalb des Freischwenkvorgangs an das Sitzteil 3 gekoppelt und damit bezüglich Drehbewegungen in Umfangsrichtung sitzteilfest. Zur Kopplung der Merkerscheibe 51 an die Lehne 4 weist die Merkerscheibe 51 an ihrem Außenrand eine erste Verzahnung 61 auf. Der Lehne 4 ist eine zweite Verzahnung 62 zugeordnet, welche der ersten Verzahnung 61 gegenüberliegt. Außerhalb des Freischwenkvorgangs sind die beiden Verzahnungen 61 und 62 voneinander beabstandet, d.h. die Merkerscheibe 51 und die Lehne 4 sind entkoppelt. Für den Freischwenkvorgang können die beiden Verzahnungen 61 und 62 auf eine später genauer beschriebene Weise miteinander in Eingriff gebracht werden.

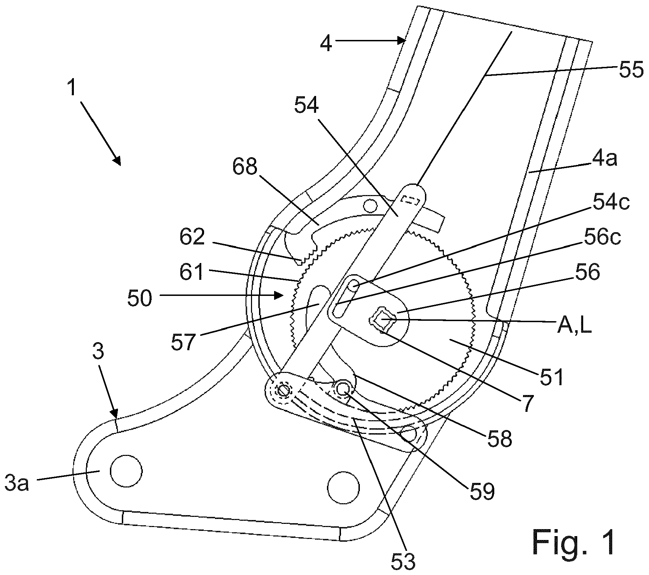

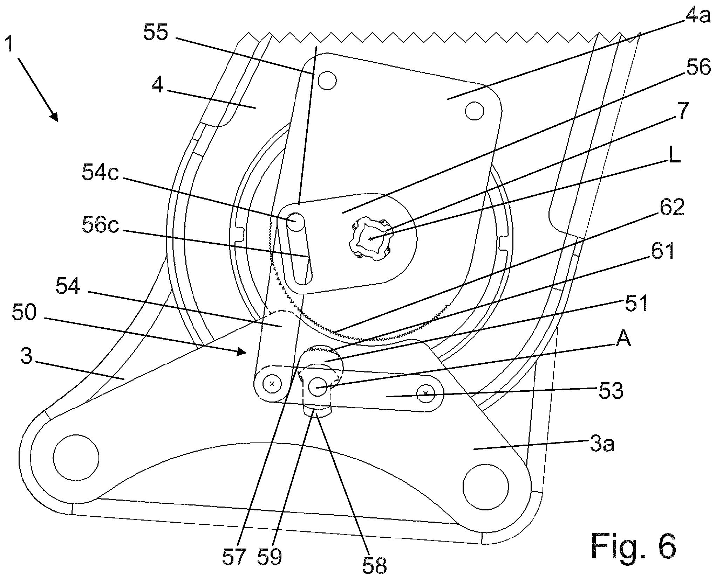

Im verriegelten Zustand des Beschlagsystems (Fig. 1, 6) sind die beiden Beschläge 10 jeweils verriegelt und die Memoryvorrichtung 50 ist in der Ausgangsstellung, in welcher das Steuerelement 59 in die Sperraufnahme 58 eingreift, womit die Merkerscheibe 51 an das Sitzteil 3 gekoppelt ist. Die Lehne 4 und die Merkerscheibe 51 sind entkoppelt, d.h. die Verzahnungen 61 und 62 sind voneinander beabstandet. Der Entriegelungszapfen 54c liegt am voreilenden Ende des Entriegelungsschlitzes 56c an.

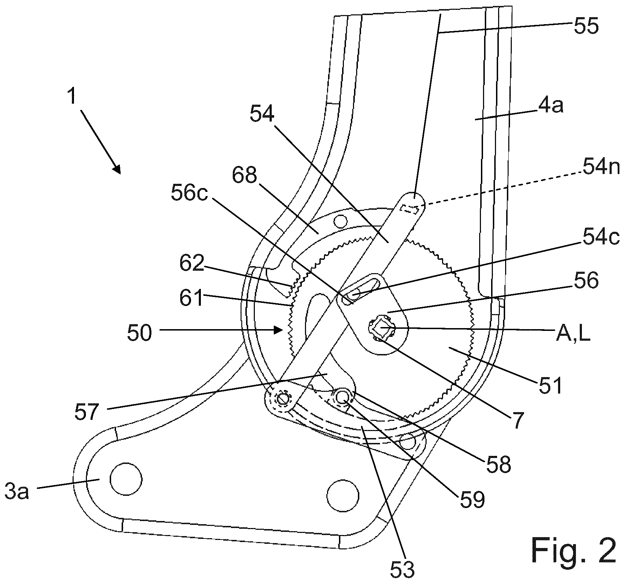

Für die Neigungseinstellung (Fig. 2) der Lehne 4 wird das erste Betätigungselement 5 geschwenkt, welches die Welle 7 um ihre eigene Achse dreht, also um die Lehnenachse L. Die Welle 7 entriegelt dadurch die beiden Beschläge 10. Außerdem schwenkt die Welle 7 den Entriegelungshebel 56. Der Entriegelungsschlitz 56c bewegt sich relativ zum Entriegelungszapfen 54c, ohne dass eine Kopplung entsteht. Die Koppel 54 bleibt daher im Ausgangszustand. Während die Lehne 4 und damit das Lehnenelement 4a um die Lehnenachse L in eine Gebrauchsstellung mit einer anderen Neigung schwenkt, bleibt die zweite Verzahnung 62 im Abstand zur ersten Verzahnung 61. Wird in der Gebrauchsstellung mit der neu eingestellten Neigung das erste Betätigungselement 5 losgelassen, verriegeln die Beschläge 10 selbsttätig, und der Entriegelungshebel 56 kehrt in die Ausgangsstellung zurück.

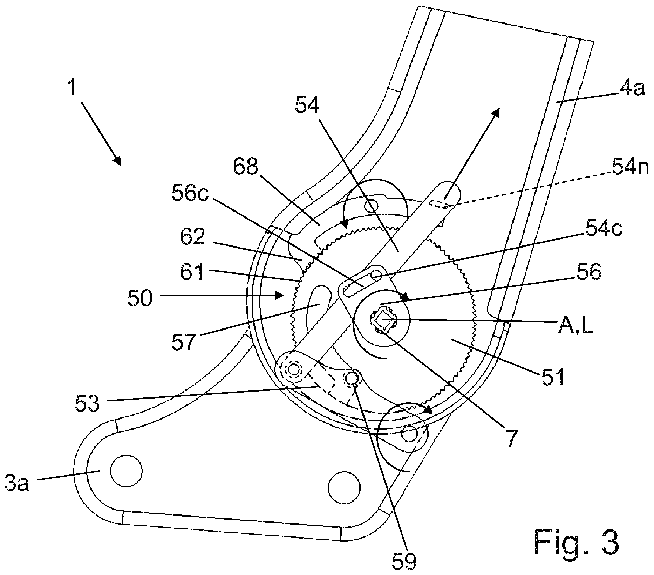

Für den Freischwenkvorgang (Fig. 3, 4, 7, 8) werden mittels des zweiten Betätigungselements 8 die Koppel 54 in radialer Richtung (nach oben) gezogen und vorzugsweise auch die Sitzschienen 9 entriegelt. Die Koppel 54 nimmt mittels des Entriegelungszapfens 54c (und des Entriegelungsschlitzes 56c) den Entriegelungshebel 56 mit, wodurch dieser die Welle 7 dreht, die daraufhin die Beschläge 10 entriegelt. Ferner nimmt die Koppel 54 den Steuerhebel 53 mit, welcher ausgelenkt wird und dadurch das Steuerelement 59 und die Sperraufnahme 58 außer Eingriff bringt. Aufgrund der Bewegung des Steuerhebels 53 und der Koppel 54 gelangen die erste Verzahnung 61 und die zweite Verzahnung 62 miteinander in Eingriff. Die Merkerscheibe 51 ist nun an die Lehne 4 gekoppelt und vom Sitzteil 3 entkoppelt. Die miteinander in Eingriff gebrachten Verzahnungen 61 und 62 speichern die eingestellte Neigung der Lehne 4. Wird nun die Lehne 4 um die Lehnenachse L nach vorne in die freigeschwenkte Stellung geschwenkt, dreht die Lehne 4, genauer gesagt das Lehnenelement 4a mit der zweiten Verzahnung 62, die Merkerscheibe 51. Der Steuerhebel 53 bleibt in seiner ausgelenkten Lage. Ebenso bleibt die Koppel 54 in ihrer Position. Mit dem Schwenken der Lehne 4 oder im Anschluss daran wird vorzugsweise der Fahrzeugsitz 1 als Ganzes nach vorne geschoben.

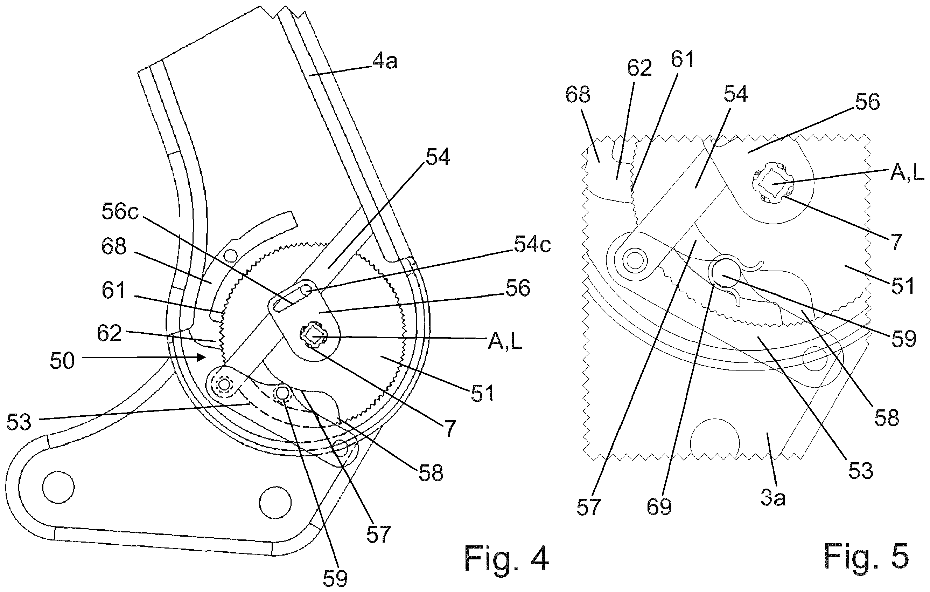

Bei der Rückkehr der Lehne 4 in die zuvor eingenommene Gebrauchsstellung mit der gespeicherten Neigung gelangt das Steuerelement 59 wieder zur Sperraufnahme 58 und ist dann auf diese ausgerichtet. Die Vorspannung des ausgelenkten Steuerhebels 53 schwenkt diesen zurück in die Ausgangsstellung, wodurch das Steuerelement 59 in die Sperraufnahme 58 hinein gezogen wird. Der aus seiner ausgelenkten Stellung in seine Ausgangsstellung zurückkehrende Steuerhebel 53 nimmt wieder die Koppel 54 mit. Die Koppel 54 gibt mittels der Schlitz-Zapfenführung aus Entriegelungszapfen 54c und Entriegelungsschlitz 56 c den Entriegelungshebel 56 frei, wodurch die internen Vorspannungen der Beschläge 10 für eine Drehung der Welle 7 in die Ausgangsstellung und ein Verriegeln der Beschläge 10 sorgen. Aufgrund der Bewegung des Steuerhebels 53 und der Koppel 54 gelangen die Verzahnungen 61 und 62 außer Eingriff. Die Merkerscheibe 51 ist dadurch von der Lehne 4 entkoppelt und wieder an das Sitzteil 3 gekoppelt. Vorzugsweise enthalten die Sitzschienen 9 eine eigene Memoryvorrichtung, welche für den Freischwenkvorgang die zuvor eingenommene Sitzlängsposition speichert. Bei dem Beschlagsystems nach den Figuren 1 bis 4, fluchtet die Achse A der Merkerscheibe 51 mit der Lehnenachse L. Vorzugsweise ist die Merkerscheibe 51 drehbar am Mitnehmer des zugeordneten Beschlags 10 gelagert. Die Merkerscheibe 51 weist eine Steuerkontur 57 auf, deren eines Ende die radial nach außen verlaufende Sperraufnahme 58 bildet, und die ansonsten aber in Umfangsrichtung verläuft, und zwar über einen Winkel, welcher wenigstens dem von der Lehne 4 überstrichenen Winkel beim Freischwenken entspricht. Die Steuerkontur 57 kann als Langloch, als Nut oder als Außenrand der Merkerscheibe 51 ausgebildet sein. Das vorzugsweise als Zapfen ausgebildete Steuerelement 59 ist fest am Steuerhebel 53 vorgesehen, d.h. befestigt oder einstückig mit diesem hergestellt.
Die erste Verzahnung 61 an der Merkerscheibe 51 weist radial nach außen und erstreckt sich in Umfangsrichtung über einen Winkel, welcher wenigstens dem von der Lehne 4 überstrichenen Winkel bei der Neigungseinstellung entspricht. Benachbart zur Merkerscheibe 51 ist eine Klinke 68 schwenkbar am Lehnenelement 4a gelagert. Die Klinke 68 weist an einem Ende die zweite Verzahnung 62 auf, die radial nach innen weist. Die Klinke 68 ist als zweiarmiger Hebel ausgebildet. An dem der zweiten Verzahnung 62 gegenüberliegenden Ende der Klinke 68 liegt die Koppel 54 mit einer Haltenase 54n an. Dabei kann die an der Koppel 54 ausgebildete Haltenase 54n in radialer Richtung die Klinke 68 beaufschlagen und in Umfangsrichtung an der Klinke 68 entlang gleiten. Die Klinke 68 ist mittels einer nicht dargestellten Feder zur Merkerscheibe 51 hin vorgespannt, wird aber von der Koppel 54 mittels der Haltenase 54n geöffnet gehalten.
Während der Neigungseinstellung (Fig. 2) der Lehne 4 bewegt sich die Klinke 68 relativ zur Merkerscheibe 51 und zur Koppel 54, wobei sie die zweite Verzahnung 62 im Abstand zur ersten Verzahnung 61 hält und an der Haltenase 54n der Koppel 54 entlang gleitet. Für den Freischwenkvorgang lenkt die Koppel 54 den Steuerhebel 53 aus, wodurch das Steuerelement 59 von der Sperraufnahme 58 in den in Umfangsrichtung verlaufenden Abschnitt der Steuerkontur 57 gebracht wird. Dieser Abschnitt der Steuerkontur 57 hält den Steuerhebel 53 ausgelenkt. Die Koppel 54 gibt an ihrer Haltenase 54n die schließend vorgespannte Klinke 68 frei, welche zur Merkerscheibe 51 schwenkt und dadurch die zweite Verzahnung 62 in Eingriff mit der ersten Verzahnung 61 bringt (Fig. 3). Wird nun die Lehne 4 nach vorne geschwenkt, nimmt das Lehnenelement 4a mittels der Klinke 68 die Merkerscheibe 51 mit. Die Steuerkontur 57 bewegt sich relativ zum Steuerelement 59, welches dabei in seiner radialen Position gehalten wird. Der ausgelenkte Steuerhebel 53 hält die Koppel 54 in ihrer die Klinke 68 freigebenden Position. Das zweite Betätigungselement 8 kann daher losgelassen werden (Fig. 4). Wenn bei der Rückkehr der Lehne 4 in die zuvor eingenommene Gebrauchsstellung der Steuerhebel 53 in die Ausgangsstellung zurückkehrt, bringt er damit die Koppel 54 in die Ausgangsstellung zurück. Die in ihre Ausgangsstellung zurückkehrende Koppel 54 schwenkt mittels ihrer Haltenase 54n die geschlossene Klinke 68, welche öffnet, so dass die Verzahnungen 61 und 62 außer Eingriff gelangen (Fig. 1).

In einer Abwandlung (Fig. 5) des Beschlagsystems nach den Figuren 1 bis 4, ist an derjenigen Stelle, welche der freigeschwenkten Stellung entspricht, ein Federclip 69 vorgesehen. Der Federclip 69 nimmt das ankommende Steuerelement 59 sanft auf und stoppt dadurch die Schwenkbewegung der Lehne 4 ("softstop"). Zugleich kann es die Lehne 4 kraftschlüssig in der freigeschwenkten Stellung sichern. Durch Beaufschlagen der Lehne 4 mit einer Betätigungskraft gibt der Federclip 69 das Steuerelement 59 wieder frei. Nach der Erfindung (Fig. 6 bis 8) ist die Achse A der Merkerscheibe 51 parallel versetzt zur Lehnenachse L angeordnet. Die Merkerscheibe 51 ist drehbar am Steuerhebel 53 gelagert. Die Merkerscheibe 51 trägt das Steuerelement 59, welches an ihr befestigt (oder einstückig mit ihr hergestellt) ist. Am Sitzteilelement 3a ist eine Steuerkontur 57 in Form eines Schlüssellochs ausgebildet. Im runden Abschnitt der Steuerkontur 57 ist das Steuerelement 59 um die Achse A drehbar, während der längliche Abschnitt der Steuerkontur 57 die Sperraufnahme 58 bildet. Das Steuerelement 59 weist näherungsweise eine Pilzform auf, mit einem zum runden Abschnitt der Steuerkontur 57 passenden Hut und einem zum Sperrabschnitt 58 passenden Stiel. Die erste Verzahnung 61 ist an der Merkerscheibe 51 am Außenrand umlaufend ausgebildet. Die zweite Verzahnung 62 ist am Lehnenelement 4a konzentrisch zur Lehnenachse L ausgebildet und läuft entlang eines Kreisbogens über einen Winkel, welcher wenigstens dem von der Lehne 4 überstrichenen Winkel beim Freischwenken entspricht. Der Krümmungsradius der zweiten Verzahnung 62 ist größer als der Radius der Merkerscheibe 51, welcher den Krümmungsradius der ersten Verzahnung 61 definiert, beispielsweise zwei bis dreimal so groß.

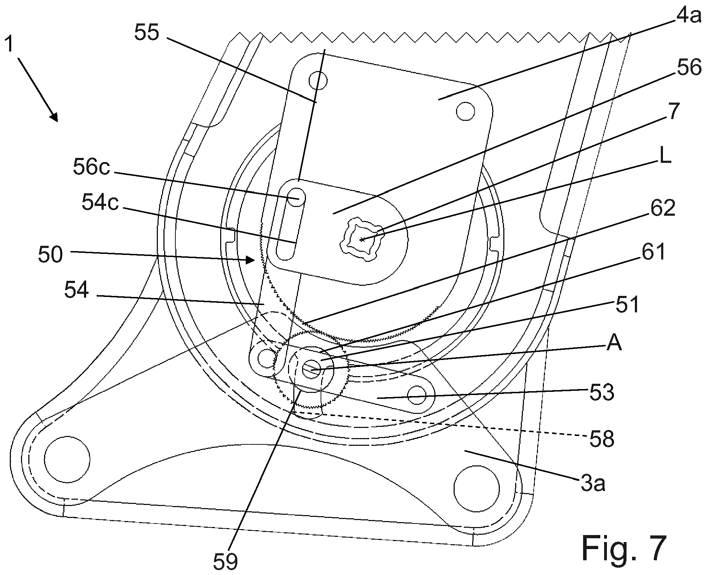

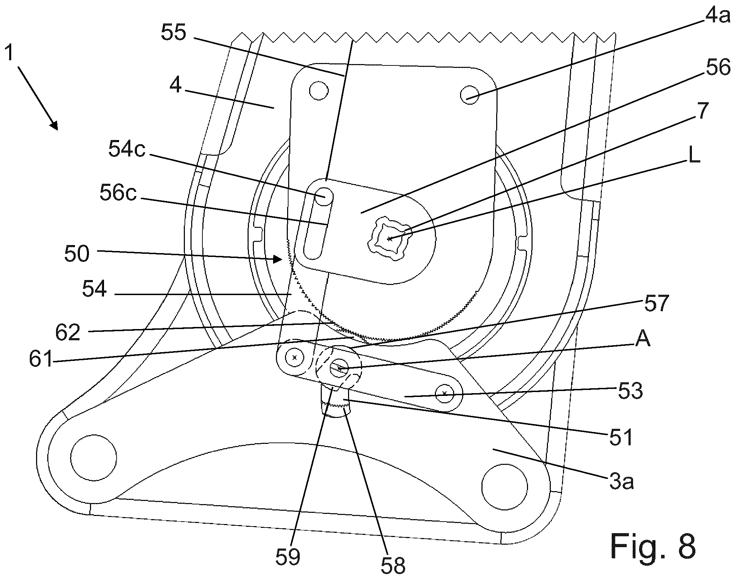

Während der Neigungseinstellung der Lehne 4 bewegt sich das Lehnenelement 4a relativ zur Merkerscheibe 51, ohne auf diese einzuwirken. Für den Freischwenkvorgang lenkt die Koppel 54 den Steuerhebel 53 aus, wodurch das Steuerelement 59 von der Sperraufnahme 58 in den runden Abschnitt der Steuerkontur 57 gebracht wird. Dieser runde Abschnitt der Steuerkontur 57 hält den Steuerhebel 53 ausgelenkt, sobald der Stiel des pilzförmigen Steuerelementes 59 um die Achse A gedreht ist. Mit der Auslenkung des Steuerhebels 53 nähert sich die Merkerscheibe 51 dem Lehnenelement 4 in radialer Richtung, bis die erste Verzahnung 61 in Eingriff mit der zweiten Verzahnung 62 gebracht ist (Fig. 7). Ein Getriebe ist entstanden, dessen Übersetzung durch die Krümmungsradien der beiden Verzahnungen 61 und 62 definiert ist. Wird nun die Lehne 4 nach vorne geschwenkt, dreht das Lehnenelement 4a die Merkerscheibe 51. Das Steuerelement 59 dreht sich relativ zur Steuerkontur 57. Dadurch wird die Achse A der Merkerscheibe 51 in ihrer Position gehalten, was den Steuerhebel 53 ausgelenkt hält. Der ausgelenkte Steuerhebel 53 hält die Koppel 54 in ihrer den Entriegelungshebel 56 beaufschlagenden Position (Fig. 8). Das zweite Betätigungselement 8 kann daher losgelassen werden. Wenn bei der Rückkehr der Lehne 4 in die zuvor eingenommene Gebrauchsstellung der Steuerhebel 53 in die Ausgangsstellung zurückkehrt, bringt er die Koppel 54 in die Ausgangsstellung zurück. Der in die Ausgangsstellung schwenkende Steuerhebel 53 entfernt die Merkerscheibe 51 vom Lehnenelement 4a, so dass die Verzahnungen 61 und 62 außer Eingriff gelangen (Fig. 6).

### Bezugszeichenliste

- 1: Fahrzeugsitz
- 3: Sitzteil
- 3a: Sitzteilelement
- 4: Lehne
- 4a: Lehnenelement
- 5: erstes Betätigungselement
- 7: Welle
- 8: zweites Betätigungselement
- 9: Sitzschiene
- 10: Beschlag
- 11: erstes Beschlagteil
- 12: zweites Beschlagteil
- 13: Umklammerungsring
- 50: Memoryvorrichtung
- 51: Merkerscheibe
- 53: Steuerhebel
- 54: Koppel
- 54c: Entriegelungszapfen
- 54n: Haltenase
- 55: Seil
- 56: Entriegelungshebel
- 56c: Entriegelungsschlitz
- 57: Steuerkontur
- 58: Sperraufnahme
- 59: Steuerelement
- 61: erste Verzahnung
- 62: zweite Verzahnung
- 68: Klinke
- 69: Federclip
- A: Achse
- L: Lehnenachse

## Patentansprüche

1. Beschlagsystem für einen Fahrzeugsitz, insbesondere für einen Kraftfahrzeugsitz, mit wenigstens einem Beschlag (10), der im Kraftfluss zwischen einer Lehne (4) des Fahrzeugsitzes (1) und einem Sitzteil (3) des Fahrzeugsitzes (1) liegt und mittels dessen die Lehne (4) in einem Freischwenkvorgang um eine Lehnenachse (L) relativ zum Sitzteil (3) von wenigstens einer Gebrauchsstellung in eine Nichtgebrauchsstellung schwenkbar ist, und mit einer Memoryvorrichtung (50), die wenigstens in einer Ausgangsstellung außerhalb des Kraftflusses zwischen Lehne (4) und Sitzteil (3) liegt und die eine um eine Achse (A) drehbar gelagerte Merkerscheibe (51) aufweist, welche während des Freischwenkvorgangs an die Lehne (4) gekoppelt und in der Ausgangsstellung an das Sitzteil (3) gekoppelt ist, und an welcher eine um die Achse (A) gekrümmte erste Verzahnung (61) ausgebildet ist, wobei der Lehne (4) eine zweite Verzahnung (62) zugeordnet ist, wobei die erste Verzahnung (61) und die zweite Verzahnung (62) während des Freischwenkvorgangs miteinander in Eingriff stehen, wobei ein relativ zum Sitzteil (3) auslenkbarer Steuerhebel (53) vorgesehen ist, welcher wenigstens temporär die Merkerscheibe (51) mit dem Sitzteil (3) koppelt, wobei eine am Steuerhebel (53) angelenkte Koppel (54) vorgesehen ist, welche für den Freischwenkvorgang mit einem Entriegelungshebel (56) für den Beschlag (10) gekoppelt ist, wobei der ausgelenkte Steuerhebel (53) und/oder die durch den ausgelenkten Steuerhebel (53) bewegte Koppel (54) die erste Verzahnung (61) und die zweite Verzahnung (62) für den Freischwenkvorgang miteinander in Eingriff bringen, wobei die Merkerscheibe (51) mittels einer Sperraufnahme (58) und eines relativ zur Sperraufnahme (58) beweglichen Steuerelements (59) in der Ausgangsstellung an das Sitzteil (3) gekoppelt ist und die Sperraufnahme (58) ein Abschnitt einer Steuerkontur (57) ist, mittels derer das am Steuerhebel (53) angeordnete Steuerelement (59) während des Freischwenkvorgangs den Steuerhebel (53) ausgelenkt hält, wobei das Steuerelement (59) während des Freischwenkvorgangs außerhalb der Sperraufnahme (58) angeordnet ist und außerhalb des Freischwenkvorgangs in der Sperraufnahme (58) gehalten ist, **dadurch gekennzeichnet, dass** die Achse (A) der Merkerscheibe (51) parallel versetzt zur Lehnenachse (L) angeordnet ist.

2. Beschlagsystem nach Anspruch 1, **dadurch gekennzeichnet, dass** die Sperraufnahme (58) an einem sitzteilfesten Sitzteilelement (3a) und das Steuerelement (59) fest an der Merkerscheibe (51) vorgesehen ist.

3. Beschlagsystem nach Anspruch 1 oder 2, **dadurch gekennzeichnet, dass** die Merkerscheibe (51) drehbar auf dem Steuerhebel (53) gelagert ist.

4. Beschlagsystem nach einem der Ansprüche 1 bis 3, **dadurch gekennzeichnet, dass** die zweite Verzahnung (62) an einem Lehnenelement (4a) ausgebildet und um die Lehnenachse (L) gekrümmt ist.

5. Beschlagsystem nach einem der vorhergehenden Ansprüche, **dadurch gekennzeichnet, dass** ein erstes Betätigungselement (5) vorgesehen ist, welches drehfest mit dem Entriegelungshebel (56) verbunden ist, insbesondere mittels einer Welle (7), und welches zum Entriegeln des Beschlags (10) zu schwenken ist.

6. Beschlagsystem nach einem der vorhergehenden Ansprüche, **dadurch gekennzeichnet, dass** ein zweites Betätigungselement (8) vorgesehen ist, welches in Wirkverbindung mit der Koppel (54) steht, insbesondere mittels eines Seils (55), und welches für den Freischwenkvorgang zu betätigen ist.

7. Fahrzeugsitz (1) mit einem Sitzteil (3) und einer Lehne (4), welche mittels eines Beschlagsystems nach einem der vorhergehenden Ansprüche am Sitzteil (3) angebracht, relativ zu diesem schwenkbar und mit unterschiedlichen Neigungseinstellungen verriegelbar ist.

## Claims

1. Fitting system for a vehicle seat, in particular for a motor vehicle seat, with at least one fitting (10) which lies in the force flux between a backrest (4) of the vehicle seat (1) and a seat part (3) of the vehicle seat (1) and by means of which the backrest (4) is pivotable in a pivoting release operation about a backrest axis (L) relative to the seat part (3) from at least one use position into a non-use position, and with a memory device (50) which, at least in a starting position, lies outside the force flux between backrest (4) and seat part (3) and which has a marker disk (51) which is mounted rotatably about an axis (A) and, during the pivoting release operation, is coupled to the backrest (4) and, in the starting position, is coupled to the seat part (3), and on which a first toothing (61) curved about the axis (A) is formed, wherein the backrest (4) is assigned a second toothing (62), wherein the first toothing (61) and the second toothing (62) are in engagement with each other during the pivoting release operation, wherein a control lever (53) which is deflectable relative to the seat part (3) and at least temporarily couples the marker disk (51) to the seat part (3) is provided, wherein a coupler (54) which is hinged to the control lever (53) and, for the pivoting release operation, is coupled to a release lever (56) for the fitting (10) is provided, wherein the deflected control lever (53) and/or the coupler (54) which is moved by the deflected control lever (53) bring the first toothing (61) and the second toothing (62) into engagement with each other for the pivoting release operation, wherein, in the starting position, the marker disk (51) is coupled to the seat part (3) by means of a lock receptacle (58) and a control element (59) which is movable relative to the lock receptacle (58), and the lock receptacle (58) is a portion of a control contour (57) by means of which the control element (59) arranged on the control lever (53) keeps the control lever (53) deflected during the pivoting release operation, wherein the control element (59) is arranged outside the lock receptacle (58) during the pivoting release operation and is held in the lock receptacle (58) outside the pivoting release operation, **characterized in that** the axis (A) of the marker disk (51) is arranged offset parallel to the backrest axis (L).

2. Fitting system according to Claim 1, **characterized in that** the lock receptacle (58) is provided on a seat part element (3a) fixed on the seat part and the control element (59) is provided fixedly on the marker disk (51).

3. Fitting system according to Claim 1 or 2, **characterized in that** the marker disk (51) is mounted rotatably on the control lever (53).

4. Fitting system according to one of Claims 1 to 3, **characterized in that** the second toothing (62) is formed on a backrest element (4a) and is curved about the backrest axis (L).

5. Fitting system according to one of the preceding claims, **characterized in that** a first actuating element (5) is provided, which actuating element is connected to the release lever (56) for conjoint rotation, in particular by means of a shaft (7), and which can be pivoted in order to release the fitting (10).

6. Fitting system according to one of the preceding claims, **characterized in that** a second actuating element (8) is provided, which actuating element is operatively connected to the coupler (54), in particular by means of a cable (55), and which can be actuated for the pivoting release operation.

7. Vehicle seat (1) with a seat part (3) and a backrest (4) which is attached by means of a fitting system according to one of the preceding claims to the seat part (3), is pivotable relative to said seat part and is lockable at different inclination settings.

## Revendications

1. Système de ferrure pour un siège de véhicule, en particulier pour un siège de véhicule automobile, comprenant au moins une ferrure (10) qui est située dans le flux de forces entre un dossier (4) du siège de véhicule (1) et une partie de siège (3) du siège de véhicule (1) et au moyen de laquelle le dossier (4) peut être pivoté au cours d'une opération de pivotement libre autour d'un axe du dossier (L) par rapport à la partie de siège (3) depuis au moins une position d'utilisation dans une position de non-utilisation, et comprenant un dispositif de mémoire (50) qui est situé au moins dans une position de départ en dehors du flux de forces entre le dossier (4) et la partie de siège (3) et qui présente un disque marqueur (51) supporté de manière rotative autour d'un axe (A), lequel, pendant l'opération de pivotement libre, est accouplé au dossier (4) et, dans la position de départ, est accouplé à la partie de siège (3), et au niveau duquel est réalisée une première denture (61) courbée autour de l'axe (A), au dossier (4) étant associée une deuxième denture (62), la première denture (61) et la deuxième denture (62), pendant l'opération de pivotement libre, étant en prise l'une avec l'autre, un levier de commande (53), pouvant être dévié par rapport à la partie de siège (3), étant prévu, lequel accouple au moins temporairement le disque marqueur (51) à la partie de siège (3), une bielle (54) articulée au levier de commande (53) étant prévue, laquelle, pour l'opération de pivotement libre, est accouplée à un levier de déverrouillage (56) pour la ferrure (10), le levier de commande dévié (53) et/ou la bielle (54) déplacée par le levier de commande dévié (53) mettant en prise l'une avec l'autre la première denture (61) et la deuxième denture (62) pour l'opération de pivotement libre, le disque marqueur (51) étant accouplé à la partie de siège (3) au moyen d'un logement d'arrêt (58) et d'un élément de commande (59) déplaçable par rapport au logement d'arrêt (58) dans la position de départ et le logement d'arrêt (58) étant une portion d'un contour de commande (57) au moyen duquel l'élément de commande (59) disposé sur le levier de commande (53) retient le levier de commande (53) de manière déviée pendant l'opération de pivotement libre, l'élément de commande (59), pendant l'opération de pivotement libre, étant disposé à l'extérieur du logement d'arrêt (58) et étant retenu en dehors de l'opération de pivotement libre dans le logement d'arrêt (58), **caractérisé en ce que** l'axe (A) du disque marqueur (51) est disposé de manière décalée parallèlement à l'axe du dossier (L).

2. Système de ferrure selon la revendication 1, **caractérisé en ce que** le logement d'arrêt (58) est prévu au niveau d'un élément de partie de siège (3a) fixé à la partie de siège et l'élément de commande (59) est prévu de manière fixée au disque marqueur (51).

3. Système de ferrure selon la revendication 1 ou 2, **caractérisé en ce que** le disque marqueur (51) est supporté de manière rotative sur le levier de commande (53).

4. Système de ferrure selon l'une quelconque des revendications 1 à 3, **caractérisé en ce que** la deuxième denture (62) est réalisée au niveau d'un élément de dossier (4a) et est courbée autour de l'axe du dossier (L).

5. Système de ferrure selon l'une quelconque des revendications précédentes, **caractérisé en ce qu'**un premier élément d'actionnement (5) est prévu, lequel est connecté de manière solidaire en rotation au levier de déverrouillage (56), en particulier au moyen d'un arbre (7), et lequel peut pivoter pour le déverrouillage de la ferrure (10) .

6. Système de ferrure selon l'une quelconque des revendications précédentes, **caractérisé en ce qu'**un deuxième élément d'actionnement (8) est prévu, lequel est en liaison fonctionnelle avec la bielle (54), en particulier au moyen d'un câble (55) et lequel peut être actionné pour l'opération de pivotement libre.

7. Siège de véhicule (1) comprenant une partie de siège (3) et un dossier (4) qui est monté au moyen d'un système de ferrure selon l'une quelconque des revendications précédentes sur la partie de siège (3), peut pivoter par rapport à celle-ci, et peut être verrouillé avec des ajustements d'inclinaison différents.
